(19) Europäisches Patentamt European Patent Office Office européen des brevets

(11) **EP 4 751 858 A1**

(12) **EUROPEAN PATENT APPLICATION**
published in accordance with Art. 153(4) EPC

(43) Date of publication:
03.06.2026 Bulletin 2026/23

(51) International Patent Classification (IPC):
**B25J 9/10** (2006.01) **B25J 13/08** (2006.01)
**B25J 19/02** (2006.01)

(21) Application number: 24845459.7

(22) Date of filing: 12.07.2024

(52) Cooperative Patent Classification (CPC):
**B25J 9/10; B25J 13/08; B25J 19/02**

(86) International application number:
**PCT/JP2024/025335**

(87) International publication number:
**WO 2025/023078 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.07.2023 JP 2023122445

(71) Applicant: **Panasonic Intellectual Property Management Co., Ltd.**
**Kadoma-shi, Osaka 571-0057 (JP)**

(72) Inventor: **OKUMURA, Ryo**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **ROBOT SYSTEM AND CONTROL METHOD**

(57) A robot system for changing a first pose indicating a position and an orientation of an object to a predetermined pose in an environment, including: a manipulator having one end fixed to the environment and to which an end effector for gripping the object is coupled; a sensor system detecting, by a sensor mechanically connected to the manipulator, a second pose of the object relative to the sensor; and a controller controlling the manipulator to change the first pose to the predetermined pose, based on the detected second pose. Before changing the first pose, the controller changes an orientation of the sensor in the environment by driving the manipulator, and acquires detection results by bringing the sensor into contact with the object fixed to the environment for every change. The controller calculates a pose to change the first pose, based on the detection results acquired by changing the sensor orientation.

*Fig. 3A*  *Fig. 3B*

**Description**

TECHNICAL FIELD

The present disclosure relates to a robot system for moving an object, and to a control method for the robot system.

BACKGROUND ART:

JP 2016-101632 A discloses a robot apparatus including a robot arm mechanism having a plurality of joints. The robot arm mechanism supports an end-effector for performing a task on a target object. The end-effector is provided with an imaging unit and three contact sensors provided in such a manner that sensitivity is exhibited in an imaging direction of the imaging unit. The control apparatus for the robot apparatus controls the robot arm mechanism so as to move the end-effector in a direction substantially orthogonal to the imaging direction, using an image captured by the imaging unit. The control apparatus also controls the robot arm mechanism to move the end-effector in a direction substantially in parallel with the imaging direction, using the position where the end-effector comes into contact with the target object as a reference, on the basis of a contact output from the contact sensor. As described above, JP 2016-101632 A aims to control the movement of the end-effector with respect to the target object, without using any external camera that captures an image of the target object.

Patent Document

Patent Document 1: JP 2016-101632 A

Non-Patent Document

Non-Patent Document 1: R. Li et al., "Localization and manipulation of small parts using GelSight tactile sensing," 2014 IEEE/RSJ International Conference on Intelligent Robots and Systems, Chicago, IL, USA, 2014, pp. 3988-3993, doi: 10.1109/IROS. 2014.6943123.

SUMMARY

The present disclosure provides a robot system capable of moving an object accurately, and a control method for the robot system.

A robot system according to one aspect of the present disclosure is a robot system for changing a first pose indicating a position and an orientation of an object to a predetermined pose in an environment, and includes a manipulator, a sensor system, and a controller. The manipulator has one end fixed to the environment, and an end effector that grips an object is coupled to the manipulator. The sensor system detects, by a sensor mechanically connected to the manipulator, a second pose of the object relative to the sensor. The controller controls a manipulating pose of the manipulator in the environment to change the first pose of the object to the predetermined pose, based on the second pose of the object detected by the sensor system. Before changing the first pose of the object, the controller changes a sensor orientation by driving the manipulator, the sensor orientation being part of a sensing pose of the sensor in the environment, and acquires a plurality of detection results from the sensor system by bringing the sensor into contact with the object every time the sensor orientation is changed in a state where the object is fixed to the environment. The controller calculates a pose to change the first pose of the object, on the basis of the plurality of detection results from the sensor system acquired by changing the sensor orientation.

These general and specific aspects may be implemented as a system, a method, and a computer program, or a combination thereof.

With the robot system and the control method for the robot system according to the present disclosure, it is possible to change the pose of the object to a predetermined pose in such a manner as to move the object accurately.

BRIEF DESCRIPTION OF DRAWINGS

Fig. 1 is a diagram for explaining a robot system according to a first embodiment;
Fig. 2 is a block diagram illustrating a configuration of a robot, a control device, and a terminal device in the robot system;

Figs. 3A and 3B are diagrams for explaining an operation of the robot system;
Fig. 4 is a sequence diagram illustrating an operation of the robot system;
Fig. 5 is a flowchart illustrating an operation of the control device in the first embodiment;
Fig. 6 is a sequence diagram illustrating an operation in which an object is moved in the robot system; and
Fig. 7 is a flowchart illustrating an operation of the control device in a modification of the first embodiment.

DETAILED DESCRIPTION

Some embodiments will now be explained in detail, with reference to drawings as appropriate. However, descriptions more in detail than necessary may be omitted. For example, detailed descriptions of well-known matters and redundant descriptions of substantially the same configurations may be omitted. This is to avoid unnecessary redundancy of the following description, and to facilitate understanding of those skilled in the art.

Note that the applicant provides the accompanying drawings and the following description to facilitate those skilled in the art to fully understand the present disclosure, and the accompanying drawings and the following description are not intended to limit the subject matter defined in the claims in any way.

(First Embodiment)

1. Configuration

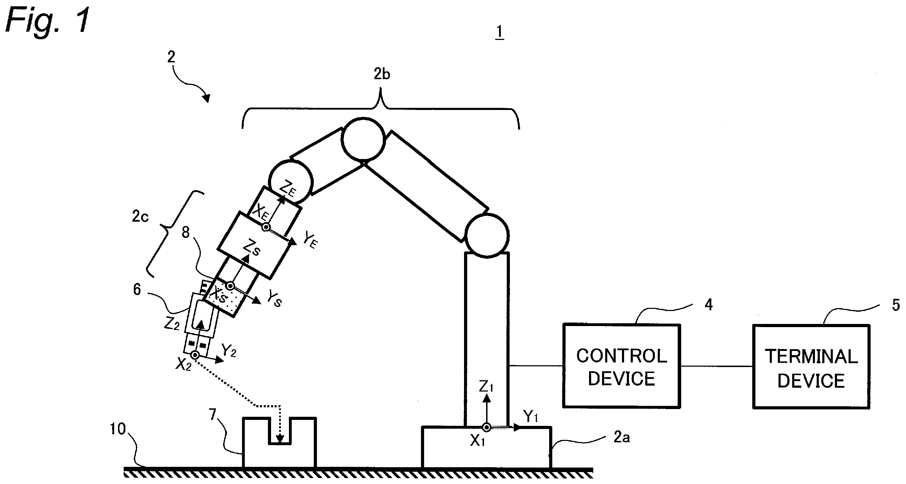

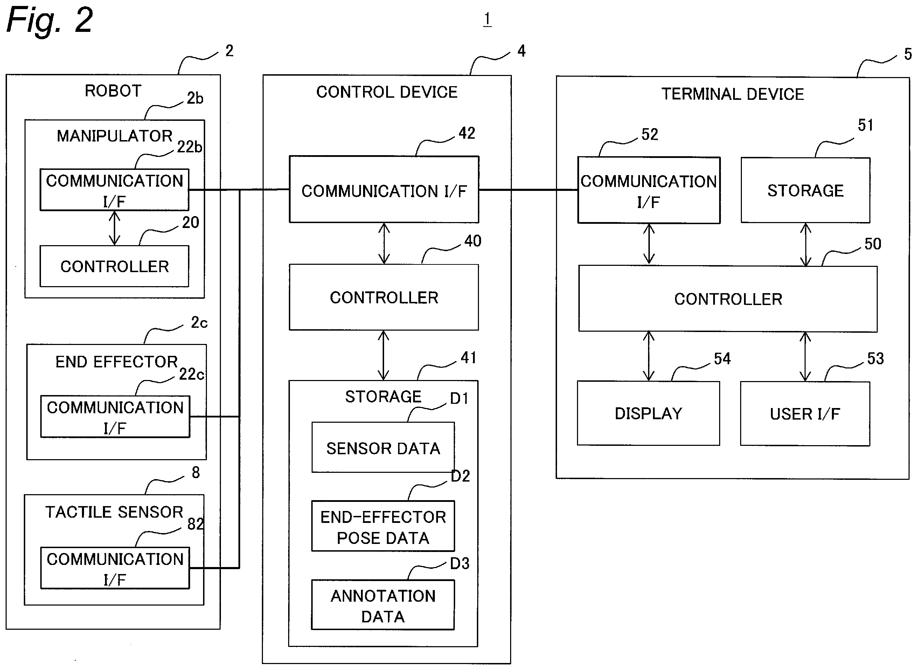

A configuration of a robot system according to a first embodiment will now be described with reference to Figs. 1 and 2.

1-1. Outline of Robot System

Fig. 1 is a diagram for explaining this robot system 1 according to the embodiment. The robot system 1 according to the embodiment includes a robot 2, a control device 4, and a terminal device 5. In the system 1, the robot 2, the control device 4, and the terminal device 5 are data-communicably connected to one another.

The system 1 is used for controlling an operation of the robot 2 on the basis of a control command transmitted from the control device 4, for example, in an environment 10 such as a factory. The robot 2 operates, in response to the control command, by driving a manipulator 2b including a plurality of joints, with respect to a base 2a fixed to the environment 10, for example. In the example in Fig. 1, the robot 2 performs an operation of moving a USB terminal connector 6, and inserting the connector 6 into a socket 7 fixed to the environment 10. The pose of the connector 6 conforming to the recess of the socket 7 in the environment 10 is an example of a predetermined pose in this embodiment, and is designated by a user using the terminal device 5, for example.

In the present disclosure, a pose of an object indicates a position and an orientation of the object, and the orientation may also be referred to as "direction". The position indicates the coordinates of the object in a Cartesian coordinate system expressed by, for example, an X axis, a Y axis, and a Z axis. The orientation indicates angles of rotation of the object represented by the rotation about each of these axes of the coordinate system. The orientation may be expressed as Euler angles, or may be expressed as a quaternion or a rotation matrix. The representation of the orientation is not limited to the above examples, and may be other representations that can identify the orientation of an object can be identified thereby.

In the robot 2 illustrated in Fig. 1, an end effector 2c is coupled to one end of the manipulator 2b (also referred to as an "arm tip") different from another end fixed to the base 2a. The end effector 2c includes a two-finger parallel gripper, for example, and can grip an object by controlling the width by which the two fingers of the gripper are opened. In this embodiment, the connector 6 is an example of the object. Further, in the system 1, the manipulator 2b is coupled to a tactile sensor 8 via the end effector 2c. The tactile sensor 8 is attached to a fingertip of the gripper, for example, and comes into contact with the object, as the gripper makes an operation of gripping the object. The tactile sensor 8 detects an object mechanically or optically, for example, upon coming into contact with the object, and generates sensor data.

For example, in the system 1, the control device 4 performs an operation for moving the connector 6 accurately to the predetermined pose as described above, using the sensor data of the tactile sensor 8.

1-2. Configuration of Robot, Control Device, and Terminal Device

Configurations of the robot 2, the control device 4, and the terminal device 5 in the system 1 will now be described with reference to Fig. 2. Fig. 2 is a block diagram illustrating the configurations of the robot 2, the control device 4, and the terminal device 5 in the robot system 1.

As illustrated in Fig. 2, for example, the robot 2 includes a controller 20 and a communication interface 22b that are provided to the manipulator 2b. Hereinafter, the interface is abbreviated as an "I/F". In the example illustrated in Fig. 2, the robot 2 also includes a communication I/F 22c provided to the end effector 2c and a communication I/F 82 provided to the tactile sensor 8. The controller 20 is implemented as a processor of various types, such as a CPU, and controls the operation of the entire robot 2.

Each of the communication I/Fs 22b, 22c, 82 is a circuit for performing data communication in accordance with a predetermined communication protocol. Examples of the predetermined communication protocol include USB, IEEE 1395, IEEE 802.3, IEEE 802.11a/11b/11g/11ac, WiFi (registered trademark), and Bluetooth (registered trademark). In other words, one or more of the communication I/Fs 22b, 22c, 82 may include a connection terminal for connecting to an external device, and may communicate with the external device over a communication network, or directly.

The controller 20 receives the control command for causing the robot 2 to operate, from the control device 4 via the communication I/F 22b, and drives each joint of the manipulator 2b on the basis of the control command. The robot 2 includes a driving device such as a motor that drives each joint. The controller 20 can change a rotation angle of each joint to an angle specified by the control command, using a detection result of an angle detection sensor such as an encoder or a resolver provided in the driving device.

The controller 20 may calculate an end-effector pose that represents a pose of the arm tip of the manipulator 2b, from the rotation angles detected successively as the robot 2 operates, for example, and transmit the end-effector pose to an external device such as the control device 4 via the communication I/F 22b. The robot system 1 according to this embodiment manages the end-effector pose using a first coordinate system. In the first coordinate system, the base 2a fixed to the environment 10 is used as a reference, for example. The first coordinate system is indicated by $X_1$, $Y_1$, and $Z_1$ in Fig. 1.

In the robot system 1 according to this embodiment, the end-effector pose is calculated as a relative pose between a manipulator-end coordinate system and the first coordinate system. The manipulator-end coordinate system is, for example, fixed to the arm tip of the manipulator 2b, that is, fixed to the rear end of the end effector 2c. The manipulator-end coordinate system is indicated by $X_E$, $Y_E$, and $Z_E$ in Fig. 1. In the system 1, the pose to which the connector 6 is to be moved is obtained as a relative pose between a second coordinate system and the first coordinate system. The second coordinate system is, for example, fixed to the connector 6 to be gripped by the end effector 2c. The second coordinate system is indicated by $X_2$, $Y_2$, and $Z_2$ in Fig. 1.

In this embodiment, the tactile sensor 8 detects an object using a known technique such as that disclosed in the Non-Patent Document 1: R. Li et al., "Localization and manipulation of small parts using GelSight tactile sensing," 2014 IEEE/RSJ International Conference on Intelligent Robots and Systems, Chicago, IL, USA, 2014, pp. 3988-3993, doi: 10.1109/IROS.2014.6943123. The tactile sensor 8 causes light sources such as light emitting diodes (LEDs) to emit light beams in three colors of R, G, and B, respectively, from a plurality of respective directions toward the object that is in contact with a gel-like surface, for example. The tactile sensor 8 then causes a camera to capture an image of the object using the reflections of the light beams. The tactile sensor 8 generates image data representing the image, and outputs the image data as the sensor data via the communication I/F 82, for example. By separating the obtained image data for the respective RGB channels, it is possible to obtain information equivalent to that of three images captured by changing the directions of a light source.

In the system 1, the control device 4 receives such sensor data and estimates the three-dimensional shape of the surface of the object that is in contact with the tactile sensor 8, with an image recognition using a photometric stereo method, for example. In this manner, the tactile sensor 8 and the control device 4 can detect the three-dimensional shape of the surface of the object in contact with the tactile sensor 8. The tactile sensor 8 and the control device 4 are examples of the sensor system in this embodiment.

In the example illustrated in Fig. 1, by estimating the three-dimensional shape of the surface of the connector 6 on the basis of the sensor data of the tactile sensor 8 contacting with the connector 6, the pose of the connector 6 relative to the tactile sensor 8 is calculated. The pose of the connector 6 relative to the tactile sensor 8 is calculated as, for example, a relative pose between the second coordinate system, which is fixed to the connector 6, and a sensor coordinate system that is fixed to the tactile sensor 8. The sensor coordinate system is indicated by $X_S$, $Y_S$, and $Z_S$ in Fig. 1.

In the system 1, for example, by causing the control device 4 to carry out a coordinate transformation between these coordinate systems, the end-effector pose of the manipulator 2b for bringing the connector 6 to the pose to be fitted into the socket 7 is calculated.

The control device 4 includes a controller 40, a storage 41, and a communication I/F 42, for example, as illustrated in Fig. 2. The control device 4 is configured as an information processing device including a robot controller that controls the robot 2, for example.

The controller 40 includes, for example, a CPU, and implements a predetermined function of the control device 4, such as the function for the coordinate transformation, by causing the CPU to execute a program (software). The controller 40 may include, instead of the CPU, a processor configured as a dedicated electronic circuit designed to implement a predetermined function. In other words, the controller 40 may be implemented using a processor of various types, such as a CPU, an MPU, a GPU, a DSU, an FPGA, or an ASIC. The controller 40 may include one or more processors.

The storage 41 is a storage medium that stores therein a program and data required for implementing the functions of the control device 4, and is configured as an HDD or an SSD, for example. For example, in addition to the program described above, the storage 41 stores therein sensor data D1 from the tactile sensor 8, end-effector pose data D2 representing the end-effector pose of the manipulator 2b, and the like received via the communication I/F 42. The storage 41 may also store therein annotation data D3 generated from the sensor data D1, as described later, for example. The program mentioned above may be provided via a communication network such as the Internet, or may be stored in a portable recording medium.

Furthermore, the storage 41 may include a RAM such as a DRAM or an SRAM, for example, and may function as a buffer memory for temporarily storing (i.e., retaining) data. The storage 41 may function as a working area of the controller 40, and may include a storage area of an internal memory provided to the controller 40.

The communication I/F 42 is a circuit for performing data communication in accordance with a predetermined communication protocol, similarly to the communication I/Fs 22b, 22c, 82 of the robot 2, for example. In the system 1, the communication I/F 42 of the control device 4 is enabled to communicate with each of the communication I/Fs 22b, 22c, and 82 of the robot 2, for example. In the control device 4, the communication I/F 42 may serve as an acquisition interface that receives various types of information by communicating with an external device or an output interface that transmits various types of information. The communication I/F 42 may also serve as an input interface via which received various types of information are input to the controller 40.

The terminal device 5 includes a controller 50, a storage 51, a communication I/F 52, a user I/F 53, and a display 54. The terminal device 5 is implemented as an information processing device such as a personal computer (PC). The controller 50 is implemented as a processor of various types, e.g., as a CPU, and implements a predetermined function by executing a program stored in the storage 51, for example. The storage 51 is a storage medium that stores therein the program and the like, and includes a nonvolatile semiconductor memory, for example. The storage 51 may include a RAM such as a DRAM or an SRAM, and may function as a working memory of the controller 50. The communication I/F 52 is a circuit for performing data communication in accordance with a predetermined communication protocol, similarly to the communication I/F 42 of the control device 4, for example.

The user I/F 53 is an umbrella term for operation members operated by a user. The user I/F 53 includes, for example, any one of a keyboard, a mouse, a trackpad, a touchpad, a button, and a switch, or a combination thereof. The user I/F 53 may form a touch panel with the display 54. The user I/F 53 acquires various types of information entered via a user operation. The user I/F 53 may include a connection terminal or the like to which an external operation member is connected, and may receive a remote control for the robot 2, via a joystick, a 3D mouse, a master arm of a master-slave system, and/or a VR controller, for example.

The display 54 includes, for example, a liquid crystal display or an organic EL display, and displays a GUI used for the machine learning of the control model 30. The display 54 may display various types of information such as various icons for operating the user I/F 53 and information entered via the user I/F 53.

The configuration of the robot system 1 is not limited to that described above. For example, the control device 4 may be integrated with the robot 2, or may be integrated with the terminal device 5. Although an example in which various types of data such as the sensor data D1 are stored in the storage 41 of the control device 4 is described above, each piece of the data D1 to D3 may also be stored in a storage device outside of the control device 4, or the pieces of data D1 to D3 may be stored in separate storage devices, respectively. Although the example in which the terminal device 5 includes a display 54 is described above, a speaker or the like that outputs sound may be provided, instead of or in addition to the display 54.

An example in which the end effector 2c of the robot 2 includes the communication I/F 22c and the tactile sensor 8 includes the communication I/F 82 is described above. It is also possible for the end effector 2c and the tactile sensor 8 to be connected to the controller 20 of the manipulator 2b, and to communicate with the control device 4 or the like via the communication I/F 22b of the manipulator 2b, for example.


2. Operations

Operations of the robot system 1 and the control device 4 having the configurations described above will now be explained.

The robot system 1 according to this embodiment controls the operation of the robot 2 that inserts the connector 6 into the socket 7, for example, as illustrated in Fig. 1. In the example illustrated in Fig. 1, the socket 7 is fixed, e.g., by being positioned with a jig, to the environment 10 where the robot 2 operates, and therefore, a pose of the socket 7 in the first coordinate system is known. By contrast, the pose of the connector 6 may vary for each time the connector 6 is gripped by the end effector 2c, for example. By the calculation of the coordinate transformation between the first coordinate system and the second coordinate system, which is for the connector 6, the system 1 moves the connector 6 in such a manner that the pose of the connector 6 matches the pose of the socket 7 in the first coordinate system.

In the system 1, for example, the control device 4 calculates the pose of the connector 6 in the first coordinate system on the basis of the following poses Pa, Pb, and Pc.

Pa: The pose of the arm tip of the manipulator 2b in the first coordinate system
Pb: The pose of the tactile sensor 8 relative to the arm tip of the manipulator 2b
Pc: The pose of the connector 6 relative to the tactile sensor 8

The control device 4 calculates the pose Pa using calculation of forward kinematics, on the basis of the rotation angles obtained by an encoder or the like that is provided to the motor of each joint of the manipulator 2b. The control device 4 calculates the pose Pc by image recognition, on the basis of the sensor data D1 from the tactile sensor 8, the sensor data D1 being obtained as image data of the connector 6.

As to the pose Pb, a possible approach for calculating the pose Pb may be calculation using CAD data of the robot 2. However, in an actual machine of the robot 2, mounting misalignment may occur when the tactile sensor 8 is mounted on the end effector 2c. Furthermore, in the end effector 2c, as to the tactile sensor 8 mounted on the fingertip of the gripper, the pose Pb of the tactile sensor 8 with the object being gripped may vary, because the opening width or the like of the gripper may change depending on factors such as the size and/or shape of the object to be gripped. In particular, variation in the pose of the tactile sensor 8 may become prominent for an underactuated gripper in which some joints are passively driven by actuation of other joints.

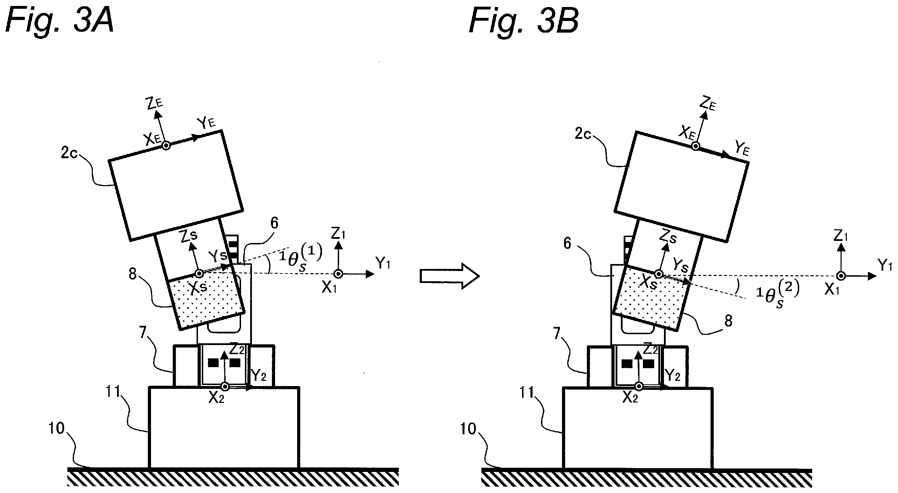

Therefore, the robot system 1 according to this embodiment performs an operation to estimate the pose Pb from data collected with the end effector 2c actually gripping the object such as the connector 6. The operation of the system 1 will now be explained with reference to Figs. 3A to 5.

2-1. Outline of Operation

An outline of the operation of the robot system 1 according to the embodiment will now be described with reference to Figs. 3A and 3B.

Figs. 3A and 3B are diagrams for explaining an operation of the robot system 1. The robot system 1 according to this embodiment grips the connector 6 a plurality of times by changing the pose of the tactile sensor 8 relative to the connector 6, and collects the data indicating the poses Pa and Pc for each time of the plurality of times. In such an operation, the connector 6 to be gripped remains fixed in the environment 10. As the pose of the tactile sensor 8 in the first coordinate system referenced to the environment 10, the system 1 changes at least the orientation of the tactile sensor 8. Figs. 3A and 3B illustrate examples of the tactile sensor 8 at two poses with different orientations.

In the examples illustrated in Figs. 3A and 3B, by fixing the connector 6 with a vise 11 in the environment 10, the connector 6 is fixed with respect to the first coordinate system. In this example, in a state where the relative pose between the second coordinate system corresponding to the connector 6 and the first coordinate system is fixed as described above, an orientation $^1\theta_S$ formed by the first coordinate system and the tactile sensor coordinate system is changed, as the orientation of the tactile sensor 8. Fig. 3A illustrates the y-direction component of the orientation $^1\theta_S^{(1)}$ in a first pose of the tactile sensor 8, and Fig. 3B illustrates a y-direction component of the orientation $^1\theta_S^{(2)}$ in a second pose of the tactile sensor 8.

The system 1 performs processing to estimate the pose Pb, that is, a connected pose of the tactile sensor 8 relative to the arm tip of the manipulator 2b (i.e., the rear end of the end effector 2c) in a gripping state, on the basis of the data indicating the poses Pa and Pc, each having been collected by changing the pose of the tactile sensor 8. With the system 1, the coordinate transformation can be calculated using the pose Pb estimated in the manner described above, so that the connector 6 can be moved accurately in the environment 10 in accordance with the pose of the connector 6 in the first coordinate system.

2-2. Overall Operation

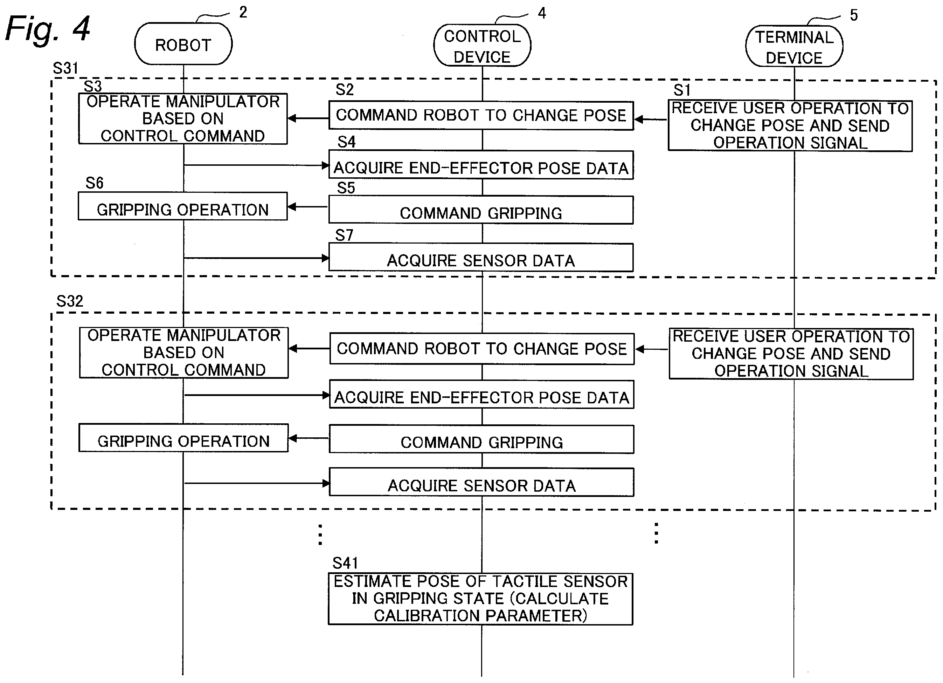

The overall operation of the robot system 1 according to the embodiment will now be described with reference to Fig. 4.

Fig. 4 is a sequence diagram illustrating an operation of the robot system 1. The system 1 receives a user operation for changing the pose of the robot 2. The user changes the pose of the robot 2 by operating the manipulator 2b using a joystick or the like on the user I/F 53 of the terminal device 5, for example (S1). The terminal device 5 transmits an operation signal corresponding to the received user operation for changing the pose, to the control device 4 via the communication I/F 52 (S1). By changing the pose of the arm tip of the manipulator 2b in the first coordinate system in response to such a user operation, the system 1 can change the pose of the tactile sensor 8 mounted on the end effector 2c, which is coupled to the arm tip of the manipulator 2b.

The controller 40 of the control device 4 then transmits a control command for instructing the robot 2 to change the pose in accordance with the operation signal received from the terminal device 5, via the communication I/F 42 (S2). One example of the control command in step S2 is a command for instructing a joint angle to the motor of each joint, the joint angle being such an angle that moves the robot 2 from the current pose to the instructed pose.

In the robot 2, the controller 20 of the manipulator 2b causes the manipulator 2b to operate, by driving each joint on the basis of the control command received via the communication I/F 22b, for example (S3). In such an operation, the controller 20 transmits encoder information, such as a rotation angle for each joint, to the control device 4.

The controller 40 of the control device 4 then calculates poses of the arm tip of the manipulator 2b in the first coordinate system, on the basis of the encoder information from the robot 2, for example, to acquire the end-effector pose data D2 representing the end-effector poses, and stores the end-effector pose data D2 in the storage 41 (S4).

The controller 40 of the control device 4 then transmits a gripping command for causing the end effector 2c to perform a gripping operation, to the robot 2 via the communication I/F 42 (S5). Upon receiving the gripping command via the communication I/F 22c in the end effector 2c, for example, the robot 2 performs the gripping operation of driving the gripper of the end effector 2c (S6). As the connector 6 or the like is gripped, the robot 2 transmits the resultant sensor data D1 from the tactile sensor 8 to the control device 4 via the communication I/F 82, for example.

The control device 4 receives the sensor data D1 of the tactile sensor 8 from the robot 2, and stores the sensor data D1 in the storage 41 (S7). On the basis of the sensor data D1, in step S7, for example, the controller 40 of the control device 4 may calculate the pose of the object contacting with the tactile sensor 8, in the sensor coordinate system. In the manner described above, by bringing the tactile sensor 8 into contact with the connector 6, the controller 40 detects the pose of the connector 6 relative to the tactile sensor 8 (S5, S7).

As described above, the system 1 collects the end-effector pose data and the sensor data in the state where the object is gripped, by changing the pose of the tactile sensor 8 via the pose of the arm tip of the manipulator 2b (S1 to S7). Similarly to the operation of collecting each piece of data (S31), the system 1 repeats collecting the pieces of data by changing the pose in response to the user operation on the terminal device 5, for example (S32).

The controller 40 of the control device 4 then performs a calculation for estimating the pose of the tactile sensor 8 in the gripping state relative to the arm tip of the manipulator 2b, on the basis of the end-effector pose data D2 and the sensor data D1 in the gripping state, which are collected by changing the pose of the tactile sensor 8 in first coordinate system (S41). Such an estimated pose of the tactile sensor 8 is calculated as an estimation result of a calibration parameter that is used for accurately calculating the relative pose of the second coordinate system with respect to the first coordinate system, that is, the pose of the connector 6 in the first coordinate system. The controller 40 then stores the estimation result in the storage 41, for example.

For example, when the operation of collecting the data D1 and D2 is repeated N times (N is a natural number), similarly to steps S31 and S32, as long as the connector 6 to be gripped is fixed with respect to the first coordinate system, the relative pose of the second coordinate system with respect to the first coordinate system remains the same, and such a relation is expressed as the following equation.

[Math. 1]

$$ {}^{1}T_2 = {}^{1}T_E^{(1)}\,{}^{E}T_S\,{}^{S}T_2^{(1)} = {}^{1}T_E^{(2)}\,{}^{E}T_S\,{}^{S}T_2^{(2)} = \cdots = {}^{1}T_E^{(N)}\,{}^{E}T_S\,{}^{S}T_2^{(N)} $$

Each variable in the above relational expression ($^{1}T_2$, $^{1}T_E$, $^{E}T_S$, $^{S}T_2$) represents a transformation between two coordinate systems, and is a homogeneous transformation matrix, for example. Each of these variables corresponds to the following pose.

$^{1}T_2$: The pose of the connector 6 in the first coordinate system (i.e., the relative pose of the second coordinate system with respect to the first coordinate system)

$^{1}T_E^{(n)}$: The pose of the arm tip of manipulator 2b in the first coordinate system in the $n^{th}$ gripping (n is a natural number of N or less)

$^{E}T_S$: The pose of the tactile sensor 8 relative to the arm tip of manipulator 2b

$^{S}T_2^{(n)}$: The pose of the connector 6 relative to the tactile sensor 8 in the $n^{th}$ gripping

In this manner, it is possible to express the poses Pa, Pb, and Pc described above as $^{1}T_E$, $^{E}T_S$, and $^{S}T_2$, respectively.

On the basis of the above relational expression, N simultaneous equations are obtained. In step S41, from the relationship represented by the such simultaneous equations, the controller 40 calculates, by applying the least squares method on the poses $^{1}T_E^{(n)}$ and $^{S}T_2^{(n)}$ over the first to the $N^{th}$ gripping, the pose $^{E}T_S$ that minimizes the error in the pose $^{1}T_2$ of the connector 6 in the first coordinate system, the poses being obtained for respective times of the N times, for example.

If the data is collected a plurality of times by changing only the position of the tactile sensor 8 without changing the orientation of the tactile sensor 8 in the first coordinate system, the image of the connector 6 would only move in parallel in the images represented by the sensor data D1, and the simultaneous equations would have infinite solutions. An example assumes that, denoting the orientation formed by the first coordinate system and the sensor coordinate system as $\theta$, only the position of the tactile sensor 8 is moved by ($\Delta X$, $\Delta Z$) in the first coordinate system. Under such an assumption, the image of the connector 6 in the image represented by the sensor data D1 moves in parallel by the distance of ($-\Delta X\cos\theta + \Delta Z\sin\theta$, $-\Delta X\sin\theta - \Delta Z\cos\theta$). However, this relationship holds regardless of the pose $^{E}T_{S}$. As a result, there arises a problem that the pose $^{E}T_{S}$ cannot be determined from the collected data D1 and D2.

By contrast, in the robot system 1 according to this embodiment, by collecting the data D1 and D2 in the gripping state changing the orientation of the tactile sensor 8 (S31, S32), it is possible to estimate the pose $^{E}T_{S}$ of the tactile sensor 8 in the gripping state, relative to the arm tip of the manipulator 2b (S41). Also, by using the data D1 and D2 collected in the state in which the connector 6 is actually being gripped, it is possible to accurately estimate the pose $^{E}T_{S}$ of the tactile sensor 8 relative to the arm tip of the manipulator 2b, even with the possible mounting misalignment, and to estimate the pose $^{E}T_{S}$ that may change depending on the object to be gripped.

2-3. Operation of Control device

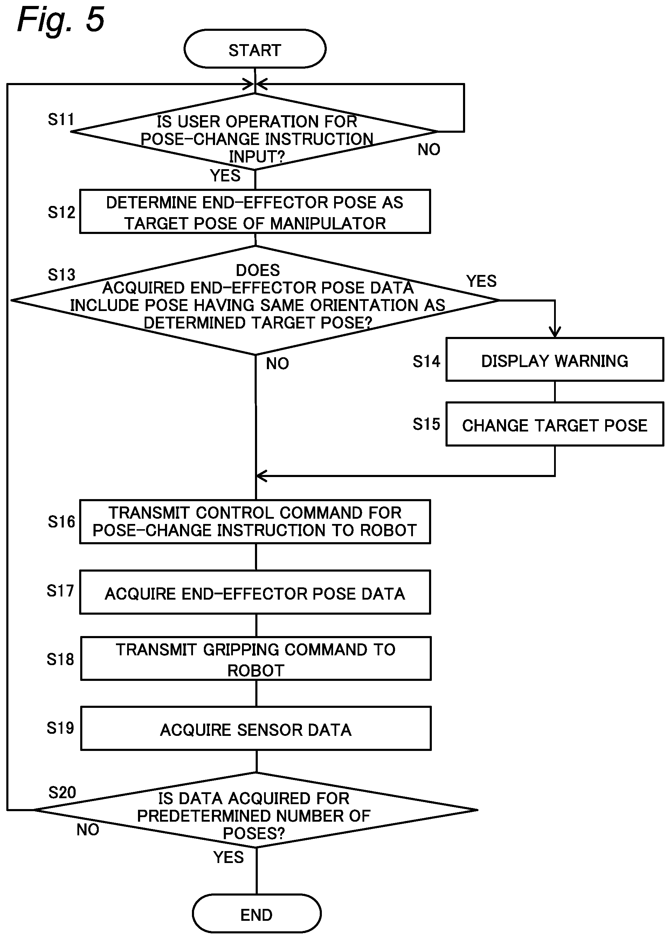

The operation of the control device 4 in the operation of the robot system 1 described above will now be explained in detail with reference to Fig. 5.

Fig. 5 is a flowchart illustrating the operation of the control device 4 in the embodiment. The flowchart in Fig. 5 is started when the terminal device 5 receives the user operation for changing the pose in step S1 in Fig. 4, for example. Each step of this flowchart is executed by the controller 40 of the control device 4.

To begin with, the controller 40 determines whether the user operation for changing the pose is received, on the basis of whether the communication I/F 42 has received an operation signal from the terminal device 5, for example (S11). When the user operation is not received (NO in S11), the controller 40 repeats the determination in step S11 at a predetermined cycle, for example.

When the user operation for changing the pose is received (YES in S11), the controller 40 determines, on the basis of the received user operation, a target pose to which the arm tip of the manipulator 2b is moved in the environment 10 (S12).

For example, the controller 40 determines whether existing end-effector pose data D2 which is already collected and stored in the storage 41 similarly to step S4 in Fig. 4, has any end-effector pose indicated by the same orientation as that of the target pose determined in step S12 (S13). The controller 40 makes the determination in step S13 by comparing each end-effector pose in the existing end-effector pose data D2 with the determined target pose, for example.

When the existing end-effector pose data D2 has any end-effector pose indicated by the same orientation as the target pose determined in step S12 (YES in S13), the controller 40 causes the display 54 of the terminal device 5 to display a warning indicator for warning the user of such duplication of the orientation (S14). In step S14, the controller 40 outputs a control signal for causing the terminal device 5 to display the warning via the communication I/F 42, for example.

The controller 40 changes the target pose in such a manner that the orientation becomes different from each of the end-effector poses in the existing end-effector pose data D2 (S15). The warning indicator in step S14 may be an indicator for notifying the user of such a change in the orientation. The target pose may be changed without displaying the warning in step S14.

After the target pose is changed (S15), the controller 40 transmits a control command for instructing the robot 2 to change the pose to the target pose, via the communication I/F 42 (S16). Step S16 corresponds to step S2 in Fig. 4. In response to such a control command for instructing the change the pose, the robot 2 changes the pose of the arm tip of the manipulator 2b to the target pose, and moves the arm tip of the manipulator 2b to the target pose, by driving the manipulator 2b (S3 in Fig. 4).

When the existing end-effector pose data D2 does not have any end-effector pose indicated by the same orientation as the target pose determined in step S12 (NO in S13), the controller 40 forwards processing to step S16. In such a case, the controller 40 transmits the control command for instructing to change the pose to the determined target pose (S16).

After the manipulator 2b is operated on the basis of the control command, the controller 40 acquires the end-effector pose data D2 from the robot 2 via the communication I/F 42 (S17). Step S17 corresponds to step S4 in Fig. 4.

The controller 40 then transmits the gripping command to the robot 2 in the state after the operation described above is performed, via the communication I/F 42 (S18). Step S18 corresponds to step S5 in Fig. 4. In response to the gripping command, the robot 2 causes the end effector 2c to perform the operation for gripping the connector 6 (S6 in Fig. 4).

The controller 40 then collects the sensor data D1 generated by the tactile sensor 8, from the robot 2 gripping the connector 6 (S19). Step S19 corresponds to step S7 in Fig. 4. In step S19, the controller 40 according to this embodiment calculates the pose of the connector 6 in the image by performing the image recognition on the image represented by the sensor data D1, and converts the calculated pose into the pose of the connector 6 relative to the tactile sensor 8, for example.

For example, before the processing illustrated in this flowchart is executed, the controller 40 generates an image recognition model for detecting the pose of the object in the image, by deep learning that is based on the annotation data D3 stored in advance in the storage 41. The annotation data D3 is, for example, data obtained by a user operation or the like for adding annotation information indicating the pose of the object in an image captured in advance by the tactile sensor 8. In the robot system 1 according to this embodiment, for example, the terminal device 5 receives the user operation for adding annotation information to the image on the user I/F 53, with the image being displayed on the display 54.

The controller 40 of the control device 4 associates each of a plurality of images with a piece of annotation information added by the user operation performed on the terminal device 5, to acquire the annotation data D3 via the communication I/F 42, and stores the annotation data D3 in the storage 41, for example. The controller 40 then uses the image recognition model trained with the annotation data D3, in the calculation of the pose of the connector 6 in the image in step S19. The controller 40 also calculates the pose of the connector 6 relative to the tactile sensor 8, from the pose of the connector 6 in the image, using internal parameters of the camera incorporated in the tactile sensor 8.

For example, after acquiring the sensor data D1 (S19), the controller 40 determines whether the sensor data D1 and the end-effector pose data D2 have been acquired for a predetermined number of poses (e.g., ten poses) (S20). For example, every time the processing of this flowchart is executed, the controller 40 may manage, by using a counter or the like, that pieces of the data D1 and D2 for one pose have been collected. The predetermined number of poses is set in accordance with a relatively large number of times of gripping, for example, from a viewpoint of reducing the influence of an error in the end-effector pose $^1T_E$ and an error in the pose $^ST_2$ of the connector 6 relative to the tactile sensor 8, in the estimation of the pose $^ET_S$ of the tactile sensor 8 relative to the arm tip of the manipulator 2b in the gripping state (S41 in Fig. 4).

With the processing described above, the target pose of the arm tip of the manipulator 2b is determined on the basis of the user operation for changing the pose (S11, S12), and the control command for instructing the robot 2 to change the pose to the target pose is transmitted (S16). After the robot 2 has operated on the basis of the control command, the end-effector pose data D2 is acquired. Furthermore, in response to the gripping command transmitted to the robot 2, the sensor data D1 in the state in which the connector 6 is being gripped is acquired (S18, S19). The processing described above is repeated until the data D1 and the data D2 are acquired for the predetermined number of poses (S20). In the manner described above, in the environment 10, the data D1 and D2 can be collected for the predetermined number of poses by changing the pose of the tactile sensor 8 on the basis of the pose of the arm tip of manipulator 2b.

With the processing described above, when the collected existing end-effector pose data D2 has any end-effector pose indicating the same orientation as the determined target pose (YES in S13), the target pose is changed so as to cause the orientation to be different from the end-effector pose for which the data has already been collected (S15). In this manner, the data D1 and D2 can be collected for the predetermined number of poses, surely changing the orientation of the tactile sensor 8 in the environment 10.

In the example described above, the target pose of the arm tip of the manipulator 2b is determined in response to the user operation received by the terminal device 5 in step S1 in Fig. 4 (S11, S12). Without limitation to such a user operation, the controller 40 may also determine the target pose in accordance with direct teaching in which the user directly operates and moves the manipulator 2b, for example. It is also possible for the controller 40 to determine the target pose automatically, without limitation to a remote or direct user operation.

In the example described above, the predetermined number in step S20 is set to a number in accordance with the relatively large number of times of gripping. For example, when the pose is determined by movement in six degrees of freedom (i.e., three degrees of freedom in each of the translation and the rotation), six simultaneous equations described above are obtained as a result of two times of gripping. Therefore, the predetermined number may be any number equal to or more than "2". For example, when the predetermined number is "2", by collecting the data D1 and D2 in the gripping state operating the manipulator 2b with the pose being changed in each of such degrees of freedom, it is possible to calculate the component corresponding to each of such degrees of freedom of the pose $^ET_S$ to be estimated.

2-4. Operation for Moving Object

An operation of the robot system 1 for moving the object to the predetermined pose in the environment 10 will now be explained. In this operation, an estimation result of the pose $^ET_S$ is used as the calibration parameter. The pose $^ET_S$ is estimated in the operation described above as a pose of the tactile sensor 8 in the gripping state, relative to the arm tip of the manipulator 2b.

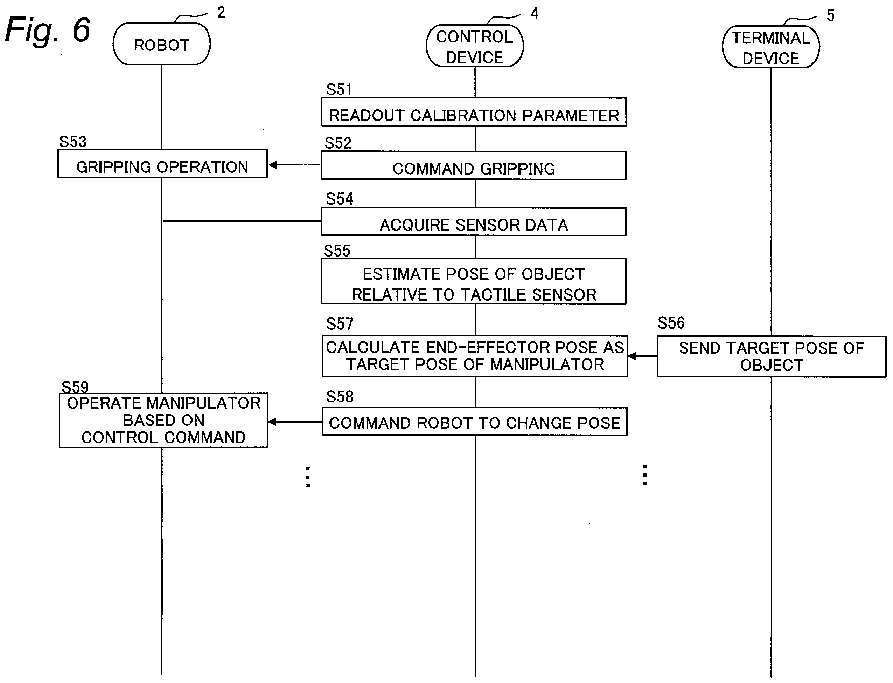

Fig. 6 is a sequence diagram illustrating the operation in which an object is moved in the robot system 1. In the explanation below, an example in which the connector 6 is moved as the object will be explained, similarly to the example illustrated in Fig. 1. The operation illustrated in Fig. 6 is started when the calculated pose $^ET_S$, which is calculated as the estimation result of the calibration parameter in step S41 in Fig. 4, is stored in the storage 41, for example.

To begin with, the controller 40 of the control device 4 reads the stored calibration parameter from the storage 41 (S51).

The controller 40 transmits the gripping command for gripping the connector 6, to the end effector 2c of the robot 2, for example, similarly to step S5 in Fig. 4 (S52). The connector 6 is located within a movable range of the end effector 2c in the environment 10, for example. The robot 2 then causes the end effector 2c to perform an operation for gripping the connector 6, on the basis of the received gripping command, similarly to step S6 in Fig. 4, for example(S53).

The controller 40 of the control device 4 then acquires the sensor data D1 generated by the tactile sensor 8 when the connector 6 is gripped, from the robot 2 via the communication I/F 42 (S54).

The controller 40 then estimates the pose $^{S}T_2$ of the connector 6 relative to the tactile sensor 8 on the basis of the acquired sensor data D1 (S55). In step S55, the controller 40 calculates the pose of the connector 6 in the sensor coordinate system on the basis of the sensor data D1, similarly to step S7 in Fig. 4, for example.

The controller 50 of the terminal device 5 then transmits the pose to which the connector 6 is to be moved in the environment 10, to the control device 4 via the communication I/F 52 so as to give the control device 4 an instruction of the target pose $^{1}T_2$ of the connector 6 in the first coordinate system (S56). Such a target pose $^{1}T_2$ of the connector 6 is stored in the storage 51 in advance, the target pose being set as the pose of the connector 6 matching the recess of the socket 7 fixed to the environment 10, as illustrated in Fig. 1, for example. The controller 40 of the control device 4 then acquires the target pose $^{1}T_2$ of the connector 6, from the terminal device 5 via the communication I/F 42.

The controller 40 of the control device 4 then calculates the pose to which the arm tip of the manipulator 2b is to be moved in the environment 10, as the target pose $^{1}T_E$ of the arm tip of the manipulator 2b in the first coordinate system, on the basis of the received target pose $^{1}T_2$ of the connector 6 (S57). The controller 40 then executes the calculation in step S57 on the basis of the pose $^{E}T_S$ of the tactile sensor 8 relative to the arm tip of the manipulator 2b and the estimation pose $^{S}T_2$ of the connector 6 relative to the tactile sensor 8. The pose $^{E}T_S$ herein is read as the calibration parameter in step S51, and the pose $^{S}T_2$ herein is estimated in step S55. The controller 40 calculates the target pose $^{1}T_E$ of the arm tip of the manipulator 2b, using the following equation.

[Math. 2]

$$^{1}T_2 = \, ^{1}T_E \, ^{E}T_S \, ^{S}T_2 \Leftrightarrow \, ^{1}T_E = \, ^{1}T_2 \big( ^{E}T_S \, ^{S}T_2 \big)^{-1}$$

The controller 40 transmits a control command for instructing pose change to the robot 2 so as to change the pose of the arm tip of the manipulator 2b to the target pose $^{1}T_E$ calculated in step S57, similarly to step S2 in Fig. 4, for example (S58).

The robot 2 then operates the manipulator 2b on the basis of the control command from the control device 4, similarly to step S3 in Fig. 4, for example (S59).

Objects such as respective items of the same product, e.g., the connector 6, can be gripped by the robot 2 substantially in the same manner. In the operation described above, the target pose $^{1}T_E$ of the arm tip of the manipulator 2b in accordance with the target pose $^{1}T_2$ of the connector 6 is calculated using the calibration parameter ($^{E}T_S$) (S51 to S57), the calibration parameter being calculated on the basis of the sensor data D1 and the end-effector pose data D2 in the gripping state. Therefore, with the use of the pose $^{E}T_S$ as the calibration parameter, which is estimated to reflect the mounting misalignment of the tactile sensor 8 with respect to the arm tip of the manipulator 2b and the variation in the pose of the tactile sensor 8 at the time of gripping, the target pose $^{1}T_E$ of the arm tip of the manipulator 2b can be calculated accurately.

The robot system 1 according to this embodiment causes the manipulator 2b to operate so as to change the pose of the arm tip of the manipulator 2b to the target pose $^{1}T_E$ calculated in the manner described above (S58, S59). Therefore, it is possible to move the connector 6 accurately so that the pose of the connector 6 is changed to the target pose $^{1}T_2$.

In the example described above, the target pose of the connector 6 is stored in advance in the storage 51 of the terminal device 5, and is instructed to the control device 4 (S56). It is also possible for the controller 50 of the terminal device 5 to receive a user input designating the pose of the connector 6 in the first coordinate system via the user I/F 53, and to give an instruction of the target pose of the connector 6 to the control device 4 on the basis of the user input. Furthermore, it is also possible for the manipulator 2b to operate in a phased manner by repeating the processing of steps S56 to S59. For example, the controller 40 of the control device 4 may calculate, as poses via which the current pose $^{1}T_2$ (time t = 0) of the connector 6 is changed to the final target pose in the environment 10, target poses $^{1}T_2$ (t = 1, 2, ...) of the connector 6 for respective phased operations of the robot 2. The controller 40 may control the pose of the manipulator 2b gripping the connector 6, on the basis of the target pose $^{1}T_2$ of the connector 6 calculated for each increment of time (t = 1, 2, ...), for example.

3. Summary

As described above, the robot system 1 according to this embodiment is an example of a robot system that changes a first pose $^1T_2$ indicating a position and an orientation of the connector 6, which is an example of an object, to a target pose, which is an example of a predetermined pose, in the environment 10. The robot system 1 includes the manipulator 2b, the tactile sensor 8, the control device 4, and the controller 40, the tactile sensor 8 and the control device 4 being an example of a sensor system. The manipulator 2b has one end fixed to the environment 10, and an end effector 2c that grips the connector 6 is coupled to another end different from the fixed one end, as an example. The sensor system detects, by the tactile sensor 8 mounted on the end effector 2c, as an example of a sensor mechanically connected to the manipulator 2b, a second pose $^ST_2$ of the connector 6 relative to the tactile sensor 8 (e.g., S7, S19, S54, S55). The controller 40 controls the end-effector pose $^1T_E$, which is an example of a manipulating pose of the manipulator 2b, in the environment 10 to change the first pose $^1T_2$ of the connector 6 to the predetermined pose, based on the second pose $^ST_2$ of the connector 6 detected by the sensor system (S57). Before changing the first pose $^1T_2$ of the connector 6, the controller 40 changes a sensor orientation of the tactile sensor 8 by driving the manipulator 2b, the sensor orientation being part of a sensing pose of the tactile sensor 8 in the environment 10(S2), and acquires a plurality of detection results from the sensor system by bringing the tactile sensor 8 into contact with the connector 6 every time the sensor orientation of the tactile sensor 8 is changed in a state where the connector 6 is fixed to the environment 10 (S5, S7). The controller 40 calculates a pose to change the first pose $^1T_2$ of the connector 6 (see, e.g., the target pose of the end-effector pose $^1T_E$, S58 to S59) based on the plurality of detection results from the sensor system acquired by changing the orientation of the tactile sensor 8 (S51, S57).

With the robot system 1 as described above, before changing the first pose $^1T_2$ of the connector 6 in the environment 10, the plurality of detection results are acquired from the sensor system by bringing the tactile sensor 8 into contact with the connector 6 fixed to the environment 10 every time the sensor orientation of the tactile sensor 8 is changed, among the position and the orientation indicating the sensing pose of the tactile sensor 8 (S5, S7). The sensor system detects the second pose $^ST_2$ of the connector 6 relative to the tactile sensor 8 in a state in which the end effector 2c is gripping the connector 6, for example. The robot system 1 calculates the pose to change the first pose $^1T_2$ of the connector 6, such as the target pose of the end-effector pose $^1T_E$, on the basis of the plurality of detection results acquired by changing the orientation of the tactile sensor 8 (S51, S57). With this, the first pose $^1T_2$ can be changed when the connector 6 is to be moved to the target pose, on the basis of the plurality of detection results in which the tactile sensor 8 is actually in contact with the connector 6 at different orientations to vary the relative pose between the tactile sensor 8 and the connector 6. For example, the pose for moving the connector 6 accurately can be calculated, even with the possible mounting misalignment of the tactile sensor 8 with respect to the arm tip of the manipulator 2b.

In this embodiment, the controller 40 changes the first pose $^1T_2$ of the connector 6 to the target pose, by controlling the manipulating pose of the manipulator 2b in the environment 10, on the basis of the pose to change the first pose $^1T_2$ of the connector 6 e.g., on the basis of the target pose of the end-effector pose $^1T_E$ calculated in step S57 (S58, see S59). By controlling the pose of the manipulator 2b in such a manner, it is possible to move the connector 6 accurately.

In this embodiment, the controller 40 calculates, the connected pose such as the pose $^ET_S$ of the tactile sensor 8 relative to the arm tip of the manipulator 2b in a state in which the end effector 2c is gripping the connector 6, on the basis of the plurality of detection results from the sensor system (S41). In this manner, it is possible to calculate the pose reflecting the mounting misalignment of the tactile sensor 8 with respect to the arm tip of the manipulator 2b. For example, the pose $^ET_S$ of the tactile sensor 8 calculated as described above can be used as the calibration parameter in the calculation of coordinate transformation between the first coordinate system referenced to the environment 10 and the second coordinate system referenced to the connector 6. In this embodiment, the pose $^ET_S$ of the tactile sensor 8 is also an example of the pose calculated to change the first pose $^1T_2$ of the connector 6 to the target pose.

In this embodiment, the robot system 1 further includes the storage 41 that stores the pose $^ET_S$ of the tactile sensor 8 relative to the arm tip of the manipulator 2b, the pose $^ET_S$ being calculated on the basis of the plurality of detection results from the sensor system. In this manner, the robot system 1 can use the stored pose $^ET_S$ of the tactile sensor 8 as the calibration parameter when performing the operation of moving the connector 6, for example (see S51).

In this embodiment, the robot system 1 further includes the controller 40, as an example of an acquisition interface that acquires the target pose (an example of the predetermined pose) of the connector 6 in the environment 10 (see S56). The controller 40 calculates a target pose of the manipulator 2b on the basis of the pose $^ET_S$ of the tactile sensor 8 relative to the arm tip of the manipulator 2b and a detection result from the sensor system in a state in which the connector 6 is being gripped, the target pose indicating the manipulating pose of the arm tip of the manipulator 2b (i.e., the end-effector pose $^1T_E$) to cause the first pose $^1T_2$ of the connector 6 to be changed to the predetermined pose in the environment 10, the pose $^ET_S$ being stored in the storage 41(S57). By controlling the pose of the manipulator 2b on the basis of the calculated target pose of the arm tip of the manipulator 2b (S58), the controller 40 changes the first pose $^1T_2$ of the connector 6 to the target pose as the predetermined pose (see S59). In this manner, it is possible to accurately calculate the pose to which the arm tip of the manipulator 2b is to be moved on the basis of the acquired target pose of the connector 6, using the stored pose $^ET_S$ of the tactile sensor 8 relative to the arm tip of the manipulator 2b as the calibration parameter. By moving the manipulator 2b in the manner described above, it is possible to move the connector 6 accurately so that the first pose $^1T_2$ of the connector 6 is changed to the target pose.

In this embodiment, the robot system 1 further includes the end effector 2c. The end effector 2c is coupled to the manipulator 2b, on the arm tip of the manipulator 2b, to connect the manipulator 2b with the tactile sensor 8 and to grip the connector 6. The tactile sensor 8 is mounted on the end effector 2c. The pose of the tactile sensor 8 relative to the arm tip of the manipulator 2b may change not only due to the mounting misalignment of the tactile sensor 8 with respect to the arm tip of the manipulator 2b, but also depending on the object to be gripped by the end effector 2c, for example. Even in such a case, the system 1 can move the connector 6 accurately.

In this embodiment, the tactile sensor 8 generates image data obtained by capturing an image of the connector 6. The sensor system detects the second pose $^ST_2$ of the connector 6 on the basis of the image represented by the image data (e.g., S7, S19, S54, S55). In this manner, it is possible to detect the second pose $^ST_2$ of the connector 6 accurately by image recognition processing performed on the image data resultant of, for example, capturing the reflection of the light corresponding to the surface shape or the like of the connector 6 that is in contact with the tactile sensor 8.

In this embodiment, the robot system 1 further includes the user I/F 53 of the terminal device 5, as an example of an input interface to input, by a user operation, the annotation information to be added to the image captured by the tactile sensor 8. The annotation information includes the pose of the connector 6 in the image as an annotated pose. For example, an image recognition model for detecting the pose of the connector 6 from the image captured by the tactile sensor 8 is obtained by deep learning or the like that uses the annotation data D3 in which such annotation information is associated with the image data, as training data.

In this embodiment, the robot system 1 further includes a user I/F 53 of the terminal device 5 as an example of a user interface that receives a user operation. The controller 40 determines a plurality of poses to cause the orientation of the tactile sensor 8 in the environment 10 for each pose to be different, the plurality of poses is determined in accordance with a remote operation of the manipulator 2b via the user I/F 53 (S1, S11, S12). In this manner, the user can designate the pose in the gripping state, without directly touching the robot 2. The controller 50 may determine the plurality of poses to cause the orientation of the tactile sensor to be different for each pose, among the position and the orientation indicating the pose of the tactile sensor in the environment 10, the plurality of poses being determined in accordance with direct teaching. In this manner, the user can designate the pose in the gripping state, by their intuitive operation. The pose in the gripping state may be designated by using both the remote operation and direct teaching described above in combination.

In this embodiment, the controller 40 compares each one of the end-effector poses in the existing end-effector pose data D2 with the determined target pose, as an example of comparing two poses among the plurality of poses, and when the end-effector pose causes the same sensor orientation as that of the target pose, as an example of when respective sensor orientations of the tactile sensor 8 for the two poses are the same (YES in S13), the controller 40 changes, as an example of changing the orientation of the tactile sensor 8 for any one of the two poses, the orientation of the target pose (S15). In this manner, for example, when the two end-effector poses determined on the basis of the user operation are at the same orientation, it is possible to modify the orientations so as to be different for the respective end-effector poses.

Provided in this embodiment is a control method for the robot system 1 for changing the first pose $^1T_2$ indicating a position and an orientation of the connector 6, as an example of an object, to a target pose, as an example of a predetermined pose, in the environment 10 (see S51 to S59, and Fig. 4 and 5). The robot system 1 includes the manipulator 2b, and as an example of a sensor system, the tactile sensor 8 and that control device 4. One end of the manipulator 2b is fixed to the environment 10, and the end effector 2c that grips the connector 6 is coupled to another end different from the one end, for example. The sensor system detects, by the tactile sensor 8 (an example of the sensor) that is mechanically connected to the manipulator 2b, the second pose $^ST_2$ of the connector 6 relative to the tactile sensor 8 (e.g., S7, S19, S54, S55). The control method is performed by the controller 40 of the control device 4, which is an example of a computer. The control method includes, before changing the first pose $^1T_2$ of the connector 6, changing the sensor orientation of the tactile sensor 8 by driving the manipulator 2b, the sensor orientation being part of a sensing pose of the tactile sensor 8 in the environment 10 (S2), and acquiring a plurality of detection results from the sensor system by bringing the tactile sensor 8 into contact with the connector 6 every time the orientation of the tactile sensor 8 is changed, in a state where the connecter 6 is fixed to the environment 10 (S5, S7). The controller 40 is configured to control the end-effector pose $^1T_E$, which is an example of a manipulating pose of the manipulator 2b in the environment 10 to change the first pose $^1T_2$ of the connector 6 to tbe predetermined pose, based on the second pose $^ST_2$ of the connector 6 detected by the sensor system. The controller 40 calculates a pose to change the first pose $^1T_2$ of the connector 6 (see, e.g., the target pose of the end-effector pose $^1T_E$, S58 to S59) based on the plurality of detection results from the sensor system, the detection results acquired by changing the orientation of the tactile sensor 8 (S51, S57).

In the embodiment, a program for causing the controller 40 of the control device 4, which is an example of a computer, to execute the control method is provided. The control method and the program described above enable the robot 2 to move the object accurately.

(Other Embodiments)

The first embodiment is described above, as an example of the technology disclosed in the present application. However, the technology according to the present disclosure is not limited thereto, and may also be applied to embodiments including changes, replacements, additions, omissions, and the like made as appropriate. In addition, it is also possible to combine the elements described in the embodiments to form a new embodiment. Other embodiments will now be explained as some examples.

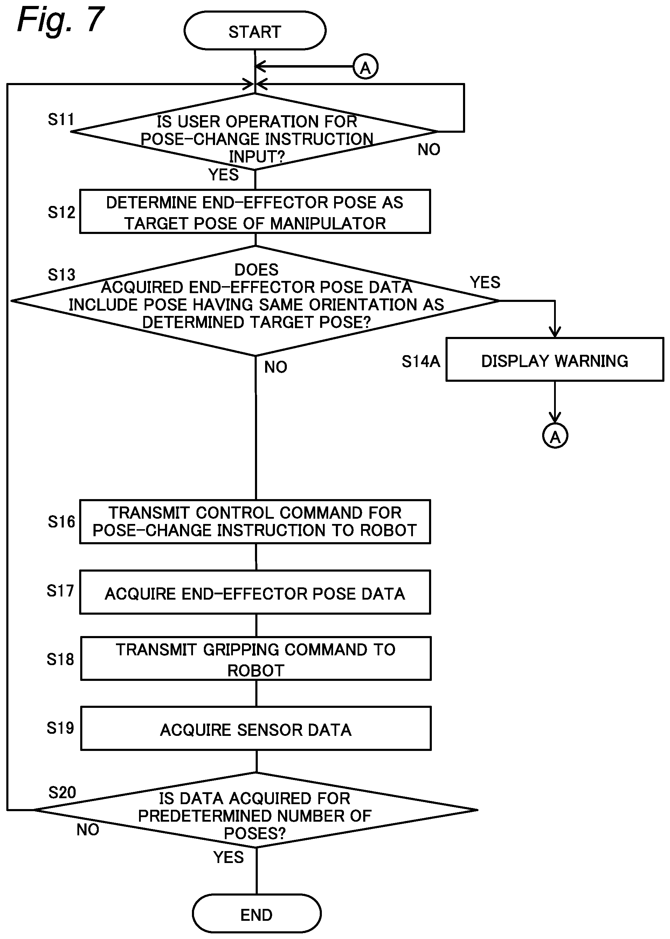

In the example described in the first embodiment, in the processing to collect the end-effector pose data D2 and the like, when the existing end-effector pose data D2 have any end-effector pose indicated by the same orientation as the target pose determined on the basis of the user operation (YES in S13 of Fig. 5), the control device 4 automatically changes the target pose (S15). In such a case, it is also possible for the control device 4 to change the target pose again on the basis of the user operation. Such a modification of the first embodiment will now be explained with reference to Fig. 7.

Fig. 7 is a flowchart illustrating an operation of the control device 4 in a modification of the first embodiment. The control device 4 according to this modification displays another warning indicator for prompting the user to change the target pose (S14A), instead of displaying the warning indicator for warning the user on the duplication of the orientation and automatically changing the target pose, as described in the first embodiment (S14, S15). In this modification, the controller 40 of the control device 4 causes the display 54 of the terminal device 5 to display the warning indicator (S14A), and then goes back to processing in step S11 to determine again whether the user operation for changing the pose is received from the terminal device 5. With this, it is also possible to collect the sensor data D1 and the end-effector pose data D2 in the gripping state, for a plurality of poses obtained by changing the orientation of the tactile sensor 8 in the environment 10.

As described above, in this modification, the robot system 1 further includes the display 54 of the terminal device 5, as an example of an output interface that outputs information to be presented to the user. The controller 40 compares each one of the end-effector poses in the acquired end-effector pose data D2 with the determined target pose, as an example of two poses among the plurality of poses, and when the end-effector pose has the same orientation as that of the target pose, as one example of when respective orientations of the tactile sensor 8 for the two poses are the same (YES in S13), the controller 40 outputs a predetermined warning on the display 54 (S14A). In this manner, for example, when the two end-effector poses determined on the basis of the user operation have the same orientation, it is possible to prompt the user to change the orientation by displaying the warning.

In the example explained in the embodiment, the pose of the connector 6 in the image is calculated from the image of the connector 6 that is in contact with the tactile sensor 8, on the basis of the sensor data D1, using the image recognition model trained by deep learning (e.g., S7, S19, S55). Such calculation of the pose of the connector 6 is not limited to the image recognition model that uses deep learning, and may be executed by various types of image recognition processing. For example, image recognition processing based on local features such as SIFT features in the image may be used, or template matching may be used.

In the example described in the embodiment, the pose of the connector 6 in the image represented by the sensor data D1 is calculated and converted into the pose of the connector 6 relative to the tactile sensor 8 (e.g., S7, S19, S55). However, the present disclosure is not limited thereto. For example, the pose of the connector 6 relative to the tactile sensor 8 may be estimated by estimating the three-dimensional shape of the connector 6 that is in contact with the tactile sensor 8, by applying the illuminance difference stereo method on the image of the sensor data D1, and comparing the estimation result with the CAD data of the connector 6.

In the example described in the embodiment, the tactile sensor 8 is used in the robot system 1. The sensor in the robot system 1 is not limited to the tactile sensor 8, and any sensor capable of detecting the pose of the object gripped by the end effector 2c relative to the sensor may be used. For example, a sensor including an array of various MEMS sensors or pressure sensors may be used. Furthermore, a sensor not coming into contact with an object may also be used, and for example, a camera or a ToF sensor that captures an image of the object using natural light may also be used. Furthermore, although, the sensor is mounted on the end effector 2c in the example explained above, the sensor may be mounted on the manipulator 2b without being mounted via the end effector 2c.

In the example described in the embodiment, the controller 40 in the control device 4 of the robot system 1 executes the control method for the robot system 1. The control method of the present disclosure is not limited to the controller 40, and may be executed by the controller 20 of the robot 2 or the controller 50 of the terminal device 5, or may be executed by a combination of two or more of the controllers 20, 40, and 50. The control method according to the present disclosure may also be executed by an external computer that performs data communication with the robot system 1.

Having been explained in the embodiment is an example in which the robot 2 performs the operation of inserting the connector 6 into the socket 7, as illustrated in Fig. 1, in the robot system 1, for example. The operation of the robot 2 in the robot system 1 is not limited to the above example, and may be, for example, various operations of moving various objects using the robot 2, such as assembling precision parts or mounting parts on a substrate. In addition, the robot system 1 is not limited to the robot 2 illustrated in Fig. 1, and may be applied to control of various robots that perform various operations.

Some embodiments have been described above, as some examples of the technology according to the present disclosure. The accompanying drawings and the detailed description have been provided for this purpose.

Accordingly, the components described in the accompanying drawings and the detailed description may include not only the components essential for solving the problems, but also components that are not essential for solving the problems, in order to explain examples of the above technology. Therefore, it should not be immediately recognized that these non-essential components are essential, based on the fact that these non-essential components are illustrated in the accompanying drawings and described in the detailed description.

In addition, the above-described embodiments are intended to illustrate the technology according to the present disclosure, and various changes, replacements, additions, omissions, and the like may be made within the scope of the claims or equivalents thereof.

(Summary of Aspects)

Various aspects according to the present disclosure are as listed below.

A first aspect according to the present disclosure is a robot system for changing a first pose indicating a position and an orientation of an object to a predetermined pose in an environment. The robot system includes: a manipulator to which an end effector for gripping the object is coupled, the manipulator having one end fixed to the environment; a sensor system configured to detect, by a sensor mechanically connected to the manipulator, a second pose of the object relative to the sensor; and a controller configured to control a manipulating pose of the manipulator in the environment to change the first pose of the object to the predetermined pose, based on the second pose of the object detected by the sensor system. The controller is configured to, before changing the first pose of the object: change a sensor orientation by driving the manipulator, the sensor orientation being part of a sensing pose of the sensor in the environment; acquire a plurality of detection results from the sensor system by bringing the sensor into contact with the object every time the sensor orientation is changed in a state where the object is fixed to the environment. The controller is configured to calculate a pose to change the first pose of the object, based on the plurality of detection results from the sensor system acquired by changing the sensor orientation.

A second aspect is the robot system according to the first aspect, wherein the controller is configured to change the first pose of the object to the predetermined pose, by controlling the manipulating pose of the manipulator in the environment based on the calculated pose to change the first pose of the object.

A third aspect is the robot system according to the first or second aspect, wherein the controller is configured to calculate a connected pose of the sensor relative to the manipulator based on the plurality of detection results from the sensor system.

A fourth aspect is the robot system according to the third aspect, further including a storage configured to store the connected pose of the sensor relative to the manipulator, the connected pose being calculated based on the plurality of detection results from the sensor system.

A fifth aspect is the robot system according to the fourth aspect, further including an acquisition interface configured to acquire the predetermined pose of the object in the environment. The controller is configured to: calculate a target pose of the manipulator based on the connected pose of the sensor relative to the manipulator and a detection result from the sensor system, the target pose indicating the manipulating pose to cause the first pose of the object to be changed to the predetermined pose in the environment, the connected pose being stored in the storage; and change the first pose of the object to the predetermined pose by controlling the manipulating pose of the manipulator based on the calculated target pose of the manipulator.

A sixth aspect is the robot system according to any of the first to fifth aspects, further including the end effector. The end effector is coupled to the manipulator to connect the manipulator with the sensor and to grip the object, and the sensor is mounted on the end effector.

A seventh aspect is the robot system according to any of the first to sixth aspects, wherein the sensor is configured to generate image data obtained by capturing an image of the object, and the sensor system is configured to detect the second pose of the object based on the image represented by the image data.

An eighth aspect is the robot system according to the seventh aspect, further including an input interface via which annotation information to be added to the image is input by a user operation. The annotation information includes an annotated pose of the object in the image.

A ninth aspect is the robot system according to any of the first to eighth aspects, wherein the controller is configured to determine a plurality of poses to cause the sensor orientation of the sensor in the environment to be different for each pose, the plurality of poses being determined in accordance with direct teaching.

A tenth aspect is the robot system according to any of the first to ninth aspects, further including a user interface configured to receive a user operation. The controller is configured to determine a plurality of poses to cause the sensor orientation of the sensor in the environment to be different for each pose, the plurality of poses being determined in accordance with a remote control of the manipulator via the user interface.

An eleventh aspect is the robot system according to the ninth or tenth aspect, wherein the controller is configured to compare two poses among the plurality of poses, and change the sensor orientation for one of the two poses when respective sensor orientations for the two poses are the same.

A twelfth aspect is the robot system according to the ninth or tenth aspect, further comprising an output interface configured to output information to be presented to a user. The controller is configured to compare two poses among the plurality of poses, and output a predetermined warning to the output interface when respective sensor orientations for the two poses are the same.

A thirteenth aspect according to the present disclosure is a control method for a robot system for changing a first pose indicating a position and an orientation of an object to a predetermined pose in an environment. The robot system includes: a manipulator to which an end effector for gripping the object is coupled, the manipulator having one end fixed to the environment; and a sensor system that detects, by a sensor mechanically connected to the manipulator, a second pose of the object relative to the sensor. The control method being performed by a controller of a computer that controls a manipulating pose of the manipulator in the environment to change the first pose of the object to the predetermined pose, based on the second pose of the object detected by the sensor system. The control method includes, before changing the first pose of the object: changing a sensor orientation by driving the manipulator, the sensor orientation being part of a sensing pose of the sensor in the environment; and acquiring a plurality of detection results from the sensor system by bringing the sensor into contact with the object every time the sensor orientation is changed in a state where the object is fixed to the environment. The controller calculates a pose to change the first pose of the object, based on the plurality of detection results from the sensor system acquired by changing the sensor orientation.

A fourteenth aspect is the control method according to the thirteenth aspect, wherein the controller changes the first pose of the object to the predetermined pose, by controlling the manipulating pose of the manipulator in the environment based on the calculated pose to change the first pose of the object.

A fifteenth aspect is a program for causing the controller to perform the control method according the thirteenth or fourteenth aspect.

The present disclosure is applicable to a variety of robotic systems for operating objects using information from sensors.

**Claims**

1. A robot system for changing a first pose indicating a position and an orientation of an object to a predetermined pose in an environment, the robot system comprising:

    a manipulator to which an end effector for gripping the object is coupled, the manipulator having one end fixed to the environment;
    a sensor system configured to detect, by a sensor mechanically connected to the manipulator, a second pose of the object relative to the sensor; and
    a controller configured to control a manipulating pose of the manipulator in the environment to change the first pose of the object to the predetermined pose, based on the second pose of the object detected by the sensor system,
    wherein the controller is configured to, before changing the first pose of the object:

        change a sensor orientation by driving the manipulator, the sensor orientation being part of a sensing pose of the sensor in the environment; and
        acquire a plurality of detection results from the sensor system by bringing the sensor into contact with the object every time the sensor orientation is changed in a state where the object is fixed to the environment, and

    the controller is configured to calculate a pose to change the first pose of the object, based on the plurality of detection results from the sensor system acquired by changing the sensor orientation.

2. The robot system according to claim 1, wherein the controller is configured to change the first pose of the object to the predetermined pose, by controlling the manipulating pose of the manipulator in the environment based on the calculated pose to change the first pose of the object.

3. The robot system according to claim 1, wherein the controller is configured to calculate a connected pose of the sensor relative to the manipulator based on the plurality of detection results from the sensor system.

4. The robot system according to claim 3, further comprising a storage configured to store the connected pose of the sensor relative to the manipulator, the connected pose being calculated based on the plurality of detection results from the sensor system.

5. The robot system according to claim 4, further comprising an acquisition interface configured to acquire the predetermined pose of the object in the environment,
   wherein the controller is configured to:

   calculate a target pose of the manipulator based on the connected pose of the sensor relative to the manipulator and a detection result from the sensor system, the target pose indicating the manipulating pose to cause the first pose of the object to be changed to the predetermined pose in the environment, the connected pose being stored in the storage; and
   change the first pose of the object to the predetermined pose by controlling the manipulating pose of the manipulator based on the calculated target pose of the manipulator.

6. The robot system according to claim 1, further comprising the end effector, wherein

   the end effector is coupled to the manipulator to connect the manipulator with the sensor and to grip the object, and the sensor is mounted on the end effector.

7. The robot system according to claim 1, wherein

   the sensor is configured to generate image data obtained by capturing an image of the object, and
   the sensor system is configured to detect the second pose of the object based on the image represented by the image data.

8. The robot system according to claim 7, further comprising an input interface via which annotation information to be added to the image is input by a user operation,
   wherein the annotation information includes an annotated pose of the object in the image.

9. The robot system according to claim 1, wherein the controller is configured to determine a plurality of poses to cause the sensor orientation in the environment for each pose to be different, the plurality of poses being determined in accordance with direct teaching.

10. The robot system according to claim 1, further comprising a user interface configured to receive a user operation,
    wherein the controller is configured to determine a plurality of poses to cause the sensor orientation in the environment for each pose to be different, the plurality of poses being determined in accordance with a remote control of the manipulator via the user interface.

11. The robot system according to claim 9 or 10, wherein the controller is configured to compare two poses among the plurality of poses, and change the sensor orientation for one of the two poses when respective sensor orientations of the sensor for the two poses are the same.

12. The robot system according to claim 9 or 10, further comprising an output interface configured to output information to be presented to a user,
    wherein the controller is configured to compare two poses among the plurality of poses, and output a predetermined warning to the output interface when respective sensor orientations of the sensor for the two poses are the same.

13. A control method for a robot system for changing a first pose indicating a position and an orientation of an object to a predetermined pose in an environment,

    the robot system including:

    a manipulator to which an end effector for gripping the object is coupled, the manipulator having one end fixed to the environment; and
    a sensor system that detects, by a sensor mechanically connected to the manipulator, a second pose of the object relative to the sensor,

    the control method being performed by a controller of a computer that controls a manipulating pose of the manipulator in the environment to change the first pose of the object to the predetermined pose, based on the second pose of the object detected by the sensor system,

wherein the control method comprises, before changing the first pose of the object:

changing a sensor orientation by driving the manipulator, the sensor orientation being part of a sensing pose of the sensor in the environment; and

acquiring a plurality of detection results from the sensor system by bringing the sensor into contact with the object every time the sensor orientation is changed in a state where the object is fixed to the environment,

wherein the controller calculates a pose to change the first pose of the object, based on the plurality of detection results from the sensor system acquired by changing the sensor orientation.

14. The control method according to claim 13, wherein the controller changes the first pose of the object to the predetermined pose, by controlling the manipulating pose of the manipulator in the environment based on the calculated pose to change the first pose of the object.

15. A program for causing the controller to perform the control method according to claim 13 or 14.

# Fig. 1

CONTROL DEVICE

TERMINAL DEVICE

## Fig. 2

EP 4 751 858 A1

## Fig. 3A

## Fig. 3B

**Fig. 4**

ROBOT `2`   CONTROL DEVICE `4`   TERMINAL DEVICE `5`

**S31**

S3
OPERATE MANIPULATOR BASED ON CONTROL COMMAND

S2
COMMAND ROBOT TO CHANGE POSE

S1
RECEIVE USER OPERATION TO CHANGE POSE AND SEND OPERATION SIGNAL

S4
ACQUIRE END-EFFECTOR POSE DATA

S6
GRIPPING OPERATION

S5
COMMAND GRIPPING

S7
ACQUIRE SENSOR DATA

**S32**

OPERATE MANIPULATOR BASED ON CONTROL COMMAND

COMMAND ROBOT TO CHANGE POSE

RECEIVE USER OPERATION TO CHANGE POSE AND SEND OPERATION SIGNAL

ACQUIRE END-EFFECTOR POSE DATA

GRIPPING OPERATION

COMMAND GRIPPING

ACQUIRE SENSOR DATA

⋮          ⋮

S41
ESTIMATE POSE OF TACTILE SENSOR IN GRIPPING STATE (CALCULATE CALIBRATION PARAMETER)

EP 4 751 858 A1

# Fig. 5

```
                         ( START )
                            │
         ┌──────────────────┼──────────────────────────┐
         │                  ▼                           │
   S11 ◢◣  IS USER OPERATION FOR                        │
         ◤ POSE-CHANGE INSTRUCTION ◥───── NO            │
         ◣ INPUT?                  ◢                     │
         │  YES                                          │
         ▼                                               │
   S12 ┌──────────────────────────────────┐             │
       │ DETERMINE END-EFFECTOR POSE AS    │             │
       │ TARGET POSE OF MANIPULATOR        │             │
       └──────────────────────────────────┘             │
                            │                            │
   S13 ◢◣        DOES              ◥── YES               │
       ◢ ACQUIRED END-EFFECTOR POSE DATA  ◣              │
       ◣ INCLUDE POSE HAVING SAME ORIENTATION AS ◢       │
       ◥ DETERMINED TARGET POSE?  ◤        │            │
         │  NO                             ▼            │
         │              S14 ┌────────────────────────┐  │
         │                  │ DISPLAY WARNING         │  │
         │                  └────────────────────────┘  │
         │              S15 ┌────────────────────────┐  │
         │                  │ CHANGE TARGET POSE      │  │
         │                  └────────────────────────┘  │
         ▼◄────────────────────────────────────────────┘
   S16 ┌──────────────────────────────────┐             │
       │ TRANSMIT CONTROL COMMAND FOR      │             │
       │ POSE-CHANGE INSTRUCTION TO ROBOT  │             │
       └──────────────────────────────────┘             │
                            │                            │
   S17 ┌──────────────────────────────────┐             │
       │ ACQUIRE END-EFFECTOR POSE DATA    │             │
       └──────────────────────────────────┘             │
                            │                            │
   S18 ┌──────────────────────────────────┐             │
       │ TRANSMIT GRIPPING COMMAND TO      │             │
       │ ROBOT                             │             │
       └──────────────────────────────────┘             │
                            │                            │
   S19 ┌──────────────────────────────────┐             │
       │ ACQUIRE SENSOR DATA               │             │
       └──────────────────────────────────┘             │
                            │                            │
   S20 ◢◣  IS DATA ACQUIRED FOR         ◥───── NO ───────┘
       ◢ PREDETERMINED NUMBER OF        ◣
       ◥ POSES?                         ◤
         │  YES
         ▼
       ( END )
```

## Fig. 6

ROBOT `2`　　　CONTROL DEVICE `4`　　　TERMINAL DEVICE `5`

S51
READOUT CALIBRATION PARAMETER

S53　　　　　　　　　S52
GRIPPING OPERATION ← COMMAND GRIPPING

S54
ACQUIRE SENSOR DATA

S55
ESTIMATE POSE OF OBJECT RELATIVE TO TACTILE SENSOR

S57　　　　　　　　　　　　　S56
CALCULATE END-EFFECTOR POSE AS TARGET POSE OF MANIPULATOR ← SEND TARGET POSE OF OBJECT

S59　　　　　　　　　S58
OPERATE MANIPULATOR BASED ON CONTROL COMMAND ← COMMAND ROBOT TO CHANGE POSE

## Fig. 7

```
                    ( START )
                         |
                         |←──────── (A)
                         |
   S11          IS USER OPERATION FOR
           POSE-CHANGE INSTRUCTION          NO
                     INPUT?
                      YES
                         |
   S12     DETERMINE END-EFFECTOR POSE AS
           TARGET POSE OF MANIPULATOR
                         |
                        DOES
   S13   ACQUIRED END-EFFECTOR POSE DATA     YES
         INCLUDE POSE HAVING SAME ORIENTATION AS  ──→
             DETERMINED TARGET POSE?              |
                        NO              S14A   DISPLAY WARNING
                         |                         |
                         |                        (A)
                         |
   S16    TRANSMIT CONTROL COMMAND FOR
          POSE-CHANGE INSTRUCTION TO ROBOT
                         |
   S17    ACQUIRE END-EFFECTOR POSE DATA
                         |
   S18    TRANSMIT GRIPPING COMMAND TO
                     ROBOT
                         |
   S19         ACQUIRE SENSOR DATA
                         |
   S20          IS DATA ACQUIRED FOR
       NO   PREDETERMINED NUMBER OF
                     POSES?
                      YES
                         |
                    ( END )
```

## INTERNATIONAL SEARCH REPORT

| International application No. |
|---|
| **PCT/JP2024/025335** |

**A.    CLASSIFICATION OF SUBJECT MATTER**

*B25J 9/10*(2006.01)i; *B25J 13/08*(2006.01)i; *B25J 19/02*(2006.01)i
FI:   B25J9/10 A; B25J19/02; B25J13/08 Z; B25J13/08 A

According to International Patent Classification (IPC) or to both national classification and IPC

**B.    FIELDS SEARCHED**

Minimum documentation searched (classification system followed by classification symbols)

B25J9/10; B25J13/08; B25J19/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2018-176404 A (SEIKO EPSON CORPORATION) 15 November 2018 (2018-11-15) entire text, all drawings | 1-15 |
| A | JP 2016-120557 A (SEIKO EPSON CORPORATION) 07 July 2016 (2016-07-07) entire text, all drawings | 1-15 |
| A | JP 2020-011339 A (CANON KABUSHIKI KAISHA) 23 January 2020 (2020-01-23) entire text, all drawings | 1-15 |
| A | JP 2007-245326 A (TOYOTA JIDOSHA KABUSHIKI KAISHA) 27 September 2007 (2007-09-27) entire text, all drawings | 1-15 |
| A | JP 2011-224695 A (TOYOTA JIDOSHA KABUSHIKI KAISHA) 10 November 2011 (2011-11-10) entire text, all drawings | 1-15 |

☑ Further documents are listed in the continuation of Box C.          ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 September 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/025335**

### C. DOCUMENTS CONSIDERED TO BE RELEVANT

| Category* | Citation of document, with indication, where appropriate, of the relevant passages | Relevant to claim No. |
|---|---|---|
| A | JP 2017-177294 A (CANON KABUSHIKI KAISHA) 05 October 2017 (2017-10-05) entire text, all drawings | 1-15 |
| A | JP 2014-184530 A (TOYOTA JIDOSHA KABUSHIKI KAISHA) 02 October 2014 (2014-10-02) entire text, all drawings | 1-15 |
| A | JP 2006-082171 A (FUJI PHOTO FILM CO., LTD.) 30 March 2006 (2006-03-30) entire text, all drawings | 1-15 |
| A | US 2007/0001638 A1 (FSI INTERNATIONAL, INC.) 04 January 2007 (2007-01-04) entire text, all drawings | 1-15 |
| A | JP 2016-101632 A (LIFE ROBOTICS INC) 02 June 2016 (2016-06-02) entire text, all drawings | 1-15 |

Form PCT/ISA/210 (second sheet) (July 2022)

## INTERNATIONAL SEARCH REPORT
### Information on patent family members

| International application No. |
|---|
| **PCT/JP2024/025335** |

| Patent document cited in search report | | | Publication date (day/month/year) | Patent family member(s) | | | Publication date (day/month/year) |
|---|---|---|---|---|---|---|---|
| JP | 2018-176404 | A | 15 November 2018 | US entire text, all drawings CN | 2018/0304467 108724179 | A1 A | |
| JP | 2016-120557 | A | 07 July 2016 | (Family: none) | | | |
| JP | 2020-011339 | A | 23 January 2020 | US entire text, all drawings | 2020/0023521 | A1 | |
| JP | 2007-245326 | A | 27 September 2007 | (Family: none) | | | |
| JP | 2011-224695 | A | 10 November 2011 | (Family: none) | | | |
| JP | 2017-177294 | A | 05 October 2017 | US entire text, all drawings | 2017/0282363 | A1 | |
| JP | 2014-184530 | A | 02 October 2014 | (Family: none) | | | |
| JP | 2006-082171 | A | 30 March 2006 | (Family: none) | | | |
| US | 2007/0001638 | A1 | 04 January 2007 | (Family: none) | | | |
| JP | 2016-101632 | A | 02 June 2016 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016101632 A

**Non-patent literature cited in the description**

- **R. LI et al.** Localization and manipulation of small parts using GelSight tactile sensing. *2014 IEEE/RSJ International Conference on Intelligent Robots and Systems, Chicago, IL, USA*, 2014, 3988-3993

- **R. LI et al.** Localization and manipulation of small parts using GelSight tactile sensing. *2014 IEEE/RSJ International Conference on Intelligent Robots and Systems*, 2014, 3988-3993